# EUROPÄISCHE PATENTSCHRIFT

(11) **EP 2 511 495 B1**
(45) Veröffentlichungstag und Bekanntmachung des Hinweises auf die Patenterteilung: **16.10.2013**
(21) Anmeldenummer: 11162436.7
(22) Anmeldetag: 14.04.2011
(51) Int. Cl.: F02B 29/04, F02M 35/10, B29C 45/17, F02M 23/00

(54) **Saugrohr für eine Brennkraftmaschine**
Intake pipe for an internal combustion engine
Tuyau d'aspiration pour moteur à combustion interne

(43) Veröffentlichungstag der Anmeldung: 17.10.2012
(73) Patentinhaber: Röchling Automotive AG & Co. KG, 68165 Mannheim (DE)
(72) Erfinder: Barbolini, Marco, 39100, Bolzano (IT); Brusco, Mirco, 39055, Laives (IT)
(74) Vertreter: Trossin, Hans-Jürgen

(56) Entgegenhaltungen:
- EP-A1- 1 849 989
- EP-A1- 2 243 938
- WO-A1-2009/138431
- DE-A1- 4 441 857
- FR-A1- 2 927 126
- JP-A- 2008 284 953
- "Möglichkeiten und Grenzen der Projektilinjektionstechnik", IKV FACHTAGUNG GAS- UND WASSERINJEKTIONSTECHNIK POTENZIALE NUTZEN, HERAUSFORDERUNGEN MEISTERN,, 28. November 2007 (2007-11-28), Seiten 1-7, XP007905530,

## Beschreibung

Die vorliegende Erfindung betrifft ein Saugrohr für eine Brennkraftmaschine gemäß dem Oberbegriff des Anspruchs 1, zur Zuführung eines Fluids, wie etwa Frischgas, zur Brennkraftmaschine, mit einem Saugrohrgehäuse, welches einen Nutzkanal umgibt, der sich zur Durchleitung des Fluids zwischen wenigstens einem am Saugrohrgehäuse vorgesehenen Fluideinlass und wenigstens einem am Saugrohrgehäuse vorgesehenen Fluidauslass erstreckt, und mit einem Kühlkanal, welcher sich zur Durchleitung eines Kühlmediums von einem Kühlmediumeinlass zu einem Kühlmediumauslass erstreckt, wobei das Saugrohrgehäuse eine Gehäusewand aufweist, welche sich in Wanddickenrichtung zwischen einer den Nutzkanal begrenzenden Innenwandseite und einer dieser entgegengesetzten Außenwandseite erstreckt, und wobei der Kühlkanal in wenigstens einem spritzgegossenen einstückigen Abschnitt der Gehäusewand des Saugrohrgehäuses zwischen der Innenwandseite und der Außenwandseite der Gehäusewand ausgebildet ist. Das Kühlmedium ist vorzugsweise eine Kühlflüssigkeit.

Ein gattungsgemäßes Saugrohr ist aus der Druckschrift JP 2008-284953 A bekannt.

Ein weiteres Saugrohr für eine Brennkraftmaschine ist aus der Druckschrift EP-A-2 243 938 bekannt. Das bekannte Saugrohr ist als mehrwandiges Saugrohr äußerst aufwändig zu fertigen. Außerdem ist in dem bekannten mehrwandigen Saugrohr die Ausbildung einer definierten Strömung des Kühlmediums im Kühlkanal nicht gewährleistet, denn die Gehäusewand kann an einer Innenwandseite Temperaturen annehmen, welche eine Materialerweichung von innenwandseitigen Abschnitten der Gehäusewand bewirken können. Die Anmelderin räumt dies in der Druckschrift selbst ein.

Es ist eine Aufgabe der vorliegenden Erfindung, eine technische Lehre für ein Saugrohr für eine Brennkraftmaschine bereitzustellen, welches einfach herzustellen ist und mit welchem über die gesamte Länge des Kühlkanals hinweg eine definierte Kühlung der Gehäusewand bewirkt werden kann, ohne dass Bauteile der Kühlkanalkühlung unerwünscht nahe an eine im Betrieb sehr heiße Brennkraftmaschine herangeführt werden müssen.

Die vorliegende Erfindung löst diese Aufgabe gemäß einem ersten Aspekt der Erfindung durch ein Saugrohr gemäß Anspruch 1.

Im Gegensatz zum eingangs zitierten Stand der Technik, bei welchem durch die Mehrwandigkeit des Saugrohrs zwar ein Strömungsraum und damit ein Kühlkanal im weitesten Sinne bereitgestellt ist, wobei dieser Strömungsraum bestenfalls in Dickenrichtung des Saugrohrgehäuses geometrisch eindeutig definiert ist, stellt die vorliegende Erfindung einen Kühlkanal in dem wenigstens einen Gehäusewandabschnitt des Saugrohrs bereit, welcher aufgrund der verwendeten Projektilinjektionstechnik und der damit einhergehenden konstanten Querschnittsgestalt definierte Strömungsverhältnisse über im Wesentlichen die gesamte Länge des Kühlkanals gewährleistet. Zwar können die Strömungsverhältnisse an Umlenkstellen geringfügig von den Strömungsverhältnissen in geraden Abschnitten des Kühlkanals abweichen, jedoch ist diese Abweichung nicht so stark, dass man bei dem Kühlkanal des erfindungsgemäßen Saugrohrs nicht von im Wesentlichen einheitlichen Strömungsverhältnissen über im Wesentlichen seine gesamte Länge sprechen könnte.

Damit kann der Kühlkanal jedoch systematisch an eine vorbestimmte oder gewünschte Kühlleistung angepasst und auf diese ausgelegt werden.

In vorteilhafter Weiterbildung der vorliegenden Erfindung ist in dem wenigstens einen Gehäusewandabschnitt dort, wo sich ein Kühlkanal befindet, der Abstand zwischen der Innenwandseite und der Außenwandseite größer als in einem kühlkanalfreien Bereich des Gehäusewandabschnitts. Dadurch wird eine Vergrößerung der Fläche des dem Kühlkanal benachbarten Abschnitts der Innenwandseite und damit eine Erhöhung der Wärmetauschleistung und eine verbesserte Kühlung bewirkt. Weiterhin erlaubt eine solche Gestaltung Materialeinsparungen und eine damit verbundene Gewichtsreduktion des erfindungsgemäßen Saugrohrs.

Der wenigstens eine Gehäusewandabschnitt ist vorteilhafterweise im Wesentlichen vollständig aus einem Kunststoff gebildet. Vorzugsweise ist die gesamte Gehäusewand, noch bevorzugter das gesamte Saugrohr, vollständig aus einem Kunststoff gebildet, wodurch das erfindungsgemäße Saugrohr oder wenigstens den Kühlkanal aufweisende Teile davon im Spritzgießverfahren mit Projektilinjektionstechnik in einem Arbeitszyklus herstellbar sind. Noch stärker bevorzugt weist der Kunststoff wenigstens des Gehäusewandabschnitts Füllstoffe mit einer relativ zur Kunststoffmatrix höheren Wärmeleitfähigkeit auf. Dies ermöglicht einen verbesserten Wärmetausch zwischen der Innenwandseite der Gehäusewand und einem in dem Kühlkanal strömenden Kühlmedium.

Weiterhin ist der wenigstens eine Gehäusewandabschnitt vorteilhafterweise im Wesentlichen vollständig aus einem kühlmittelbeständigen Kunststoff gebildet, so dass das verwendete Kühlmittel den Kunststoff und insbesondere Innenflächen des Kühlkanals nicht beschädigen kann. Besonders bevorzugte Kühlmittel sind wegen ihrer niedrigen Gefrierpunkte und relativ hohen Wärmekapazitäten Glykol und Glykol-Wasser-Gemische. Der Gehäusewandabschnitt sollte daher vorzugsweise aus einem glykolbeständigen Kunststoff gebildet sein.

Die Herstellung des Saugrohrgehäuses kann dadurch erleichtert werden, dass das Saugrohrgehäuse mehrteilig ist. In einem mit vergleichsweise geringem Aufwand herstellbaren Saugrohr ist dabei gemäß einer besonders bevorzugten Ausführungsform der Erfindung der Kühlkanal in nur einem Saugrohrgehäuseteil gebildet.

Eine noch wirksamere und gleichmäßigere Kühlung kann im Falle eines mehrteiligen Saugrohrgehäuses hingegen erreicht werden, wenn in mehreren Saugrohrgehäuseteilen je ein Kühlkanal gebildet ist. Besonders bevorzugt ist in jedem Saugrohrgehäuseteil je ein Kühlkanal gebildet. Dann kann jeder Kühlkanal mit frischem Kühlmedium beschickt werden, das noch nicht durch einen vorhergehenden Wärmetauschvorgang erwärmt ist.

Gemäß einer weiteren bevorzugten Ausführungsform eines Saugrohrs mit mehrteiligem Saugrohrgehäuse erstreckt sich der Kühlkanal über mehrere Saugrohrgehäuseteile. Dies kann einen verringerten Montageaufwand und einen vereinfachten Betrieb des Kühlkanals ermöglichen. So kann beispielsweise eine zur Förderung des Kühlmediums in dem Kühlkanal gewünschtenfalls eingesetzte Pumpe eine Förderung des Kühlmediums in allen Kühlkanalabschnitten bewirken. Außerdem können die Kühlkanalabschnitte in den einzelnen Saugrohrgehäuseteilen so gefertigt werden, dass ein Kühlmediumeinlass eines Kühlkanalabschnitts an den Kühlmediumauslass eines vorhergehenden Kühlkanalabschnitts in einem anderen Saugrohrgehäuseteil unmittelbar anschließt, so dass ein zusätzlicher Montageaufwand zur Verbindung von aufeinander folgenden Kühlkanalabschnitten vermieden oder wenigstens reduziert werden kann. Weiterhin kann so die Anzahl von zum Bestimmen eines Wertes einer Temperatur, eines Drucks oder einer anderen Zustandsgröße des Kühlmediums in dem Kühlkanal gewünschtenfalls eingesetzten Sensoren und der gegebenenfalls zur Regelung/Steuerung der Temperatur, des Drucks oder einer anderen Zustandsgröße des Kühlmittels in den Kühlkanalabschnitten erforderliche Aufwand bzw. die dazu erforderliche Anzahl von Regelungs-/Steuerungseinheiten reduziert werden.

Ferner weist der Kühlkanal vorzugsweise einen im Wesentlichen kreisförmigen Querschnitt auf. Durch einen kreisförmigen Querschnitt kann einerseits das Verhältnis des Kühlkanalvolumens zu der zur Bildung des Gehäusewandabschnitts eingesetzten Materialmenge vergrößert werden. Andererseits können durch einen solchen Querschnitt der Strömungswiderstand des Kühlmittels verringert und eine weitgehend störungsfreie laminare Strömung des Kühlmittels erreicht werden. Der Querschnitt kann jedoch auch die Gestalt eines Langloches oder eine eckige Gestalt, beispielsweise die Gestalt eines Rechtecks oder eines Vielecks, aufweisen, je nach Querschnittsgestalt des zur Bildung des Kühlkanals verwendeten Projektils, dessen Negativ die Querschnittsgestalt des Kühlkanals ist.

Vorzugsweise verläuft der Kühlkanal wenigstens abschnittsweise im Wesentlichen mäanderartig, wodurch die Positonen von Kühlmediumeinlass und von Kühlmediumauslass an dem oder in Bezug zu dem Saugrohr weitgehend unabhängig gewählt werden können und daher in Abhängigkeit von Gegebenheiten des Fahrzeugs und insbesondere von Abmaßen der Brennkraftmaschine wählbar sind, an welche das Saugrohr montierbar sein kann. Der Kühlkanal kann aber beispielsweise auch spiral-, wendel- oder schneckenförmig verlaufen. Sowohl durch einen mäanderartigen als auch durch einen spiral-, wendel- oder schneckenförmigen Verlauf des Kühlkanals ist eine über den gesamten Gehäusewandabschnitt hinweg im Wesentlichen gleichmäßige Kühlwirkung erzielbar. Außerdem ist dadurch eine vorteilhaft hohe Kühlkanaldichte an dem jeweiligen Saugrohrgehäuseteil erreichbar.

Um eine möglichst gleichmäßige Kühlung des Gehäusewandabschnitts über den gesamten Gehäusewandabschnitt hinweg zu erreichen, ist im Falle eines mäanderartigen Verlaufs des Kühlkanals vorzugsweise ein mittlerer Abstand zwischen zwei benachbarten gegenläufigen Mäanderabschnitten relativ klein im Vergleich zu einem Durchmesser des Kühlkanals. Vorzugsweise ist dieser mittlere Abstand nicht größer als das Achtfache, vorzugsweise nicht größer als das Dreifache, eines Durchmessers des Kühlkanals.

Erfindungsgemäß verläuft der Kühlkanal wenigstens abschnittsweise, vorzugsweise größtenteils, im Wesentlichen orthogonal zu der Strömungsrichtung des durch den Nutzkanal geleiteten Fluids. Durch einen solchen Verlauf kann verhindert werden, dass Bauteile und Baugruppen der Kühlkanalkühlung unerwünscht nahe an die im Betrieb sehr heiße Brennkraftmaschine herangeführt werden müssen.

Vorteilhafterweise umfasst das Saugrohr zum Erzielen einer weiter verbesserten Kühlwirkung eine weitere, außerhalb von Gehäusewandabschnitten vorgesehene Kühlvorrichtung zur Kühlung des Fluids. Die Kühlvorrichtung ist vorzugsweise in dem Nutzkanal angeordnet, so dass das Fluid die Kühlvorrichtung umströmen oder durchströmen kann, wodurch eine besonders wirksame Kühlung erreicht werden kann. Vorteilhafterweise ist die Kühlvorrichtung dazu ausgebildet, mit dem im Kühlkanal vorhandenen Kühlmedium betrieben zu werden. Dazu kann die Kühlvorrichtung in Kühlmedium-Verbindung mit dem Kühlkanal stehen.

Die Aufgabe der vorliegenden Erfindung wird gemäß einem zweiten Aspekt durch ein Verfahren zur Herstellung eines Saugrohrs für eine Brennkraftmaschine gemäß Anspruch 12 gelöst, welches die folgenden Schritte umfasst:
- Füllen einer Formkavität mit einem einen Kunststoff umfassenden Gießmaterial zur Bildung eines Gehäuseteilrohlings, und anschließend
- Verdrängen von noch nicht gehärtetem Gießmaterial aus einem Gehäusewandabschnitt des Gehäuseteilrohlings durch Projektilinjektion und dadurch Bildung eines Kühlkanals.

Das Saugrohr ist dabei vorteilhafterweise ein Saugrohr nach einem der vorhergehenden Ansprüche.

Gemäß dem erfindungsgemäßen Verfahren wird in einem Gehäusewandabschnitt eines Gehäuseteilrohlings ein Kühlkanal durch Verdrängen von einen Kunststoff umfassendem Gießmaterial aus dem Gehäusewandabschnitt gebildet mittels Durchgang eines Projektils durch die noch fließfähige Seele des in die Kavität eingefüllten Gießmaterials. Dies erlaubt eine kostengünstige und schnelle Fertigung von Saugrohren, welche in einem Gehäusewandabschnitt einen Kühlkanal mit definierter Kanalgestalt aufweisen.

Vorteilhafterweise sieht das Verfahren Schritte vor, um den Kühlkanal oder/und den Gehäusewandabschnitt wie in Bezug auf Ausführungsformen des erfindungsgemäßen Saugrohrs offenbart auszubilden. Die den Verlauf des Kühlkanals bestimmende Trajektorie des Projektils wird durch Ausnehmungen in der Formkavität definiert, die mit einer darauf erstarrten Schicht an Gießmaterial das Projektil führen. Die oben im Zusammenhang mit dem erfindungsgemäßen Saugrohr genannten Vorteile gelten mutatis mutandis für das erfindungsgemäße Verfahren entsprechend.

Durch das verwendete Projektilinjektionsverfahren kann der Kühlkanal derart gebildet werden, dass er im Wesentlichen über seine gesamte Länge einen Querschnitt mit im Wesentlichen konstanter Querschnittsgestalt aufweist. Dadurch kann besonders wirkungsvoll über die gesamte Länge des Kühlkanals hinweg eine gleichmäßige Kühlung der Gehäusewand bewirkt werden und daher eine Materialerweichung von innenwandseitigen Abschnitten der Gehäusewand verhindert werden.

Vorzugsweise wird die Injektion durch ein druckbeaufschlagtes Fluid, etwa Gas oder Flüssigkeit, insbesondere Wasser, bewirkt. Dies ermöglicht ein schnelles An- und Abschalten der Druckbeaufschlagung des Projektils durch das Fluid und damit ein schnelles und gleichzeitig in hohem Maße den gewünschten Abmaßen und dem gewünschten Verlauf des Kühlkanals Rechnung tragendes Fertigungsverfahren.

Die vorliegende Erfindung wird nachfolgend anhand der beiliegenden Figur näher beschrieben werden. Es stellen dar:
- Fig. 1: eine Ausführungsform des erfindungsgemäßen Saugrohrs in ei-ner Draufsicht, wobei der Verlauf des verdeckten Kühlkanals angedeutet ist;
- Fig. 2: die Ausführungsform des erfindungsgemäßen Saugrohrs in ei-ner Seitenansicht, wobei der Kühlkanal und der Verlauf eines Teils der Innenseitenwand angedeutet sind.

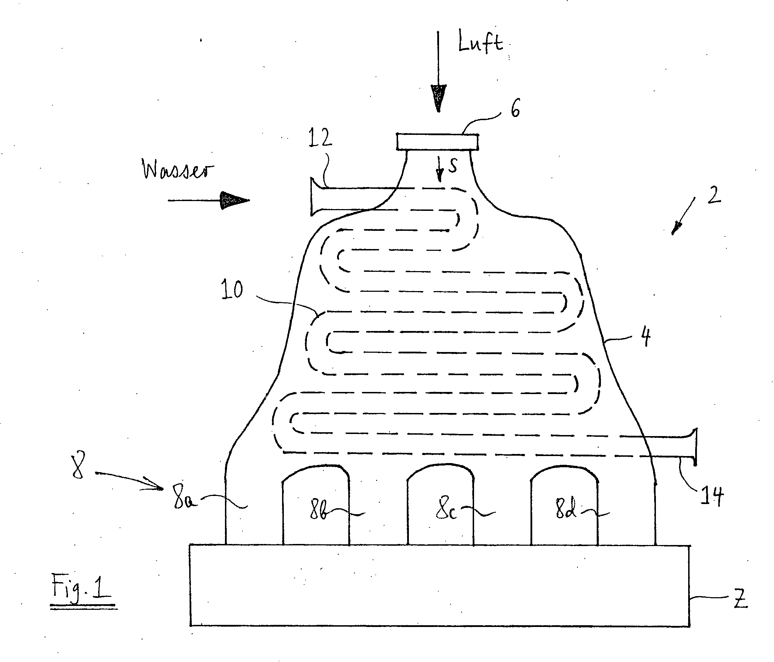

Figur 1 zeigt eine Ausführungsform des erfindungsgemäßen Saugrohrs 2 für eine Brennkraftmaschine, welches dazu ausgebildet ist, der Brennkraftmaschine Verbrennungsluft, gegebenenfalls unter Nutzung von Abgasrückführung, zuzuführen. Von der Brennkraftmaschine ist in den Figuren nur ein Abschnitt eines Zylinderkopfes Z dargestellt. Das Saugrohr 2 umfasst ein Saugrohrgehäuse 4, an welchem ein Fluideinlass 6 und wenigstens ein Fluidauslass 8 vorgesehen sind. Im dargestellten Beispiel eines zu einer Vier-Zylinder-Brennkraftmaschine hinführenden Saugrohrs 2 sind vier Fluidauslässe 8a-8d vorgesehen, wobei die Anzahl von Fluidauslässen 8 jedoch von vier verschieden sein kann und in der Regel mit der Anzahl an Zylindern der angeschlossenen Brennkraftmaschine übereinstimmt. In einem Betriebszustand des Saugrohrs 2 wird ein Fluid durch den Fluideinlass 6 dem Saugrohr 2 zugeführt und verlässt dieses durch die Fluidauslässe 8a-8d, um dem Zylinderkopf Z der nicht dargestellten Brennkraftmaschine zugeführt zu werden. Das Fluid ist vorzugsweise Luft, insbesondere Frischluft aus einer Umgebung eines Fahrzeugs, in welchem das Saugrohr 2 und die Brennkraftmaschine montiert sind. Das Fluid kann aber, beispielsweise im Falle einer Brennkraftmaschine mit Abgasrückführung, auch ein Frischluft-Abgas-Gemisch umfassen.

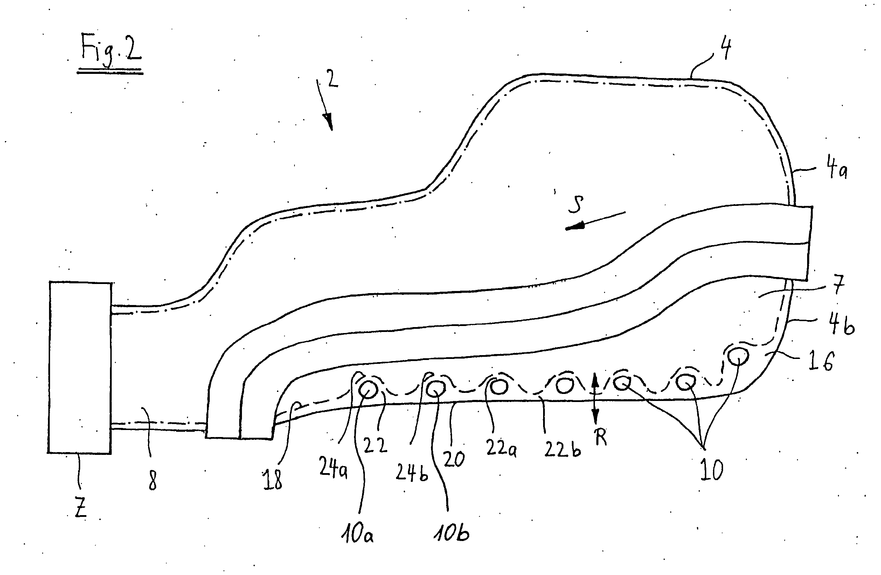

Das Saugrohr 2 umgibt und definiert einen Nutzkanal 7, welcher sich zwischen dem Fluideinlass 6 und den Fluidauslässen 8a-8d erstreckt und dazu vorgesehen ist, das Fluid durch das Saugrohr 2 hindurch zu der Brennkraftmaschine zu führen. Weiterhin weist das Saugrohr 2 eine Gehäusewand 16 auf, die sich zwischen einer den Nutzkanal 7 begrenzenden Innenwandseite 18 und einer der Innenwandseite 18 entgegengesetzten Außenwandseite 20 der Gehäusewand 16 erstreckt (siehe Fig. 2). Das Saugrohr 2 ist wenigstens abschnittsweise vorzugsweise ein durch Spritzgießen und anschließende Projektilinjektion, wie unten beschrieben, hergestelltes Kunststoffteil.

In dem Saugrohr 2 ist ferner ein Kühlkanal 10 gebildet, welcher sich zwischen einem Kühlmediumeinlass 12 und einem Kühlmediumauslass 14 erstreckt und zur Durchleitung eines Kühlmediums vorgesehen ist. Das Kühlmedium ist dazu bestimmt, das Saugrohrgehäuse 4 wenigstens abschnittsweise zu kühlen und damit auch das entlang des Nutzkanals 7 strömende Fluid zu kühlen. Dadurch kann insbesondere eine Materialerweichung von innenwandseitigen Abschnitten der Gehäusewand 16 verhindert werden. Der Kühlkanal 10 ist in wenigstens einem spritzgegossenen einstückigen Abschnitt 22 der Gehäusewand 16 zwischen der Innenwandseite 18 und der Außenwandseite 20 ausgebildet. Der wenigstens eine Gehäusewandabschnitt 22 ist im Wesentlichen vollständig aus einem kühlmittelbeständigen Kunststoff gebildet. Das Kühlmedium ist vorzugsweise Glykol oder Wasser oder ein Glykol-Wassergemisch. Der wenigstens eine Gehäusewandabschnitt 22 ist daher vorzugsweise aus einem glykolbeständigen Kunststoff gebildet. Gemäß der in den Figuren dargestellten Ausführungsform wird als dem Kühlmediumeinlass 12 zuzuführendes Kühlmedium Wasser und als durch den Nutzkanal 7 durchzuleitendes Fluid Luft verwendet.

Ferner ist der wenigstens eine Gehäusewandabschnitt 22 gemäß einer bevorzugten Ausführungsform im Wesentlichen vollständig aus einem Kunststoff gebildet, welcher Füllstoffe aufweist, deren Wärmeleitfähigkeit höher ist als die Wärmeleitfähigkeit der Kunststoffmatrix.

Um in dem Saugrohr 2 über die gesamte Länge des Kühlkanals 10 hinweg eine gleichmäßige Kühlung der Gehäusewand 16 erreichen, weist der Kühlkanal 10 in dem wenigstens einen Gehäusewandabschnitt 22 im Wesentlichen über die gesamte Länge des Kühlkanals 10 einen Querschnitt mit im Wesentlichen konstanter Querschnittsgestalt auf. Vorzugsweise weist der Kühlkanal 10 wie in der in Figur 1 gezeigten Ausführungsform einen im Wesentlichen kreisförmigen Querschnitt auf.

Um die durch den Kühlkanal 10 erzielte Kühlwirkung weiter zu verbessern, ist der Abstand zwischen der Innenwandseite 18 und der Außenwandseite 20 in einem Bereich 22a des wenigstens einen Gehäusewandabschnitts 22, wo sich der Kühlkanal 10 befindet, vorzugsweise größer als in einem kühlkanalfreien Bereich 22b des Gehäusewandabschnitts 22. Die Innenwandseite 18 weist daher in einem Querschnitt, wie in Figur 2 gezeigt, eine im Wesentlichen gewellte Gestalt auf, wobei die Lage der Wellenberge 24a, 24b, usw. durch die Lage zugeordneter Abschnitte 10a, 10b, usw. des Kühlkanals 10 bestimmt ist. Auf diese Weise kann die für den Übergang von Wärme von der Innenwandseite 18 zu dem Kühlkanal 10 und dessen Abschnitten 10a, 10b, usw. bereitgestellte Fläche der Innenwandseite 18 vergrößert und damit eine wirksamere Kühlung bewirkt werden.

Das Saugrohrgehäuse 4 kann ein oder mehrere Teile umfassen, also einteilig oder mehrteilig sein. Es ist vorzugsweise mehrteilig und, wie in den Figuren 1 und 2 dargestellt, noch bevorzugter zweiteilig, nämlich umfassend ein erstes Saugrohrgehäuseteil 4b mit dem Gehäusewandabschnitt 22 und ein das erste Saugrohrgehäuseteil zum Saugrohr 2 ergänzendes zweites Saugrohrgehäuseteil 4a. Durch eine mehrteilige Ausbildung des Saugrohrgehäuses 4 kann dieses in wirtschaftlicher Weise gefertigt werden. Die Saugrohrgehäuseteile 4a, 4b sind vorzugsweise in einem Spritzgussverfahren hergestellte Kunststoffteile.

Im Falle eines mehrteiligen Saugrohrgehäuses 4 kann in einer Mehrzahl von Saugrohrgehäuseteilen je ein Kühlkanal 10 gebildet sein. Insbesondere kann in jedem der Saugrohrgehäuseteile je ein Kühlkanal 10 gebildet sein. Alternativ kann, wie in der hier dargestellten Ausführungsform, nur in einem der Saugrohrgehäuseteile 4a, 4b, hier: Saugrohrgehäuseteil 4b, ein Kühlkanal 10 gebildet sein. Darüber hinaus kann sich der Kühlkanal 10 über mehrere Saugrohrgehäuseteile erstrecken.

Wie in Figur 1 gut zu erkennen ist, verläuft der Kühlkanal 10 gemäß einer bevorzugten Ausführungsform der Erfindung wenigstens abschnittsweise, vorzugsweise jedoch über seine gesamte Länge, mäanderartig. Dadurch ist es möglich, die Position des Kühlmediumeinlasses 12 und die Position des Kühlmediumauslasses 14 an dem oder relativ zu dem Saugrohrgehäuse 4 weitgehend uneingeschränkt zu wählen. Der Kühlkanal 10 kann jedoch auch abschnittsweise oder über seine gesamte Länge beispielsweise im Wesentlichen schneckenförmig gebildet sein.

Ferner ist es denkbar, in Wanddickenrichtung R zwischen der Innenwandseite 18 und der Außenwandseite 20 eine Mehrzahl von Kühlkanälen oder aber eine Mehrzahl nicht unmittelbar aneinander angrenzender Abschnitte desselben Kühlkanals 10 vorzusehen.

Um zu verhindern, dass Bauteile und Baugruppen der Kühlkanalkühlung unerwünscht nahe an die im Betrieb sehr heiße Brennkraftmaschine geführt werden müssen, verläuft der Kühlkanal 10, wie in den Figuren 1 und 2 dargestellt, gemäß einer bevorzugten Ausführungsform wenigstens abschnittsweise, noch bevorzugter größtenteils über seine gesamte Länge, im Wesentlichen senkrecht zu der Strömungsrichtung S des durch den Nutzkanal 7 strömenden Fluids.

Der Kühlkanal 10 kann Teil eines Kühlkreislaufs zur Kühlung des durch den Kühlkanal 10 durchzuleitenden Kühlmediums sein. Der Kühlkreislauf kann ferner eine Kühlmediumpumpe und eine Kühlvorrichtung umfassen. Vorzugsweise umfasst das Saugrohr 2 eine zusätzliche, außerhalb von Gehäusewandabschnitten 22 vorgesehene Kühlvorrichtung (nicht dargestellt), welche gemäß einer bevorzugten Ausführungsform in dem Nutzkanal 7 zwischen dem Fluideinlass 6 und dem wenigstens einen Fluidauslass 8 angeordnet ist, um das durch den Nutzkanal 7 durchzuleitende Fluid zu kühlen. Insbesondere kann die Kühlvorrichtung zur Ableitung von von dem Fluid aufgenommener Wärme von einem Kühlmedium durchströmt sein. In Weiterbildung dieser Ausführungsform können alle stromabwärts von der Kühlvorrichtung im Wesentlichen angeordneten Gehäusewandbereiche wenigstens eines Saugrohrgehäuseteils kühlkanalfrei ausgebildet sein, wenn eine hinreichende Kühlung dieser Bereiche durch die zusätzliche Kühlvorrichtung sichergestellt ist. Ferner kann die Kühlvorrichtung zur Kühlung des in dem Kühlkanal 10 geleiteten Kühlmediums in Fluidverbindung mit dem Kühlkanal 10 stehen.

Zur Herstellung des Saugrohrs 2 wird für wenigstens ein Gehäuseteil 4b zunächst eine Gießform (Formkavität) mit einem einen Kunststoff umfassenden Gießmaterial gefüllt, um einen Gehäuseteilrohling zu bilden. Die Gießform ist in Abschnitten, welche dem den Kühlkanal 10 umfassenden Gehäusewandabschnitt 22 zugeordnet sind, in einem Querschnitt derart gewellt ausgebildet, dass in diesen Gießformabschnitten gebildete Wellentäler jeweils einem der Wellenberge 24a, 24b usw. der Innenwandseite 18 des Gehäusewandabschnitts 22 zugeordnet sind und dass in den Gießformabschnitten gebildete Wellenberge jeweils einem Wellental der Innenwandseite 18 zugeordnet sind. Die Wellentäler der Gießform dienen der Führung eines Projektils, welches zur Verdrängung der noch fließfähigen Seele des in die Wellentäler gefüllten Gießmaterials durch die Kavität hindurch angetrieben werden.

Der Kunststoff umfasst vorzugsweise Füllstoffe, welche eine relativ zu der Kunststoffmatrix höhere Wärmeleitfähigkeit aufweisen. In einem weiteren Verfahrensschritt wird anschließend noch nicht gehärtetes Gießmaterial aus einem Gehäusewandabschnitt 22 des Gehäuseteilrohlings verdrängt, wodurch ein Kühlkanal 10 in dem Gehäuseteilrohling gebildet wird. Die Verdrängung des Gießmaterials erfolgt durch Injektion des oben genannten Projektils in das noch nicht gehärtete Gießmaterial. Vorzugsweise wird die Projektilinjektion durch ein unter Druck stehendes Fluid bewirkt. Die das Projektil umfassende Verdrängungsvorrichtung kann hierzu beispielsweise eine in die Gießform hinein und aus dieser hinaus bewegbare Düsenanordnung aufweisen.

Erfindungsgemäß weist der Kühlkanal 10 im Wesentlichen über seine gesamte Länge einen Querschnitt mit im Wesentlichen konstanter Querschnittsgestalt auf. Der Kühlkanal 10 und der Gehäusewandabschnitt 22 des gemäß dem erfindungsgemäßen Verfahren hergestellten Saugrohrs können die vorangehend in Bezug auf diese Elemente offenbarten Merkmale aufweisen.

## Patentansprüche

1. Saugrohr (2) für eine Brennkraftmaschine, zur Zuführung eines Fluids, wie etwa Frischgas, zur Brennkraftmaschine, mit einem Saugrohrgehäuse (4), welches einen Nutzkanal (7) umgibt, der sich zur Durchleitung des Fluids zwischen wenigstens einem am Saugrohrgehäuse (4) vorgesehenen Fluideinlass (6) und wenigstens einem am Saugrohrgehäuse (4) vorgesehenen Fluidauslass (8) erstreckt, und mit einem Kühlkanal (10), welcher sich zur Durchleitung eines Kühlmediums, vorzugsweise einer Kühlflüssigkeit, von einem Kühlmediurneinlass (12) zu einem Kühlmediumauslass (14) erstreckt,
wobei das Saugrohrgehäuse (4) eine Gehäusewand (16) aufweist, welche sich in Wanddickenrichtung (R) zwischen einer den Nutzkanal (7) begrenzenden Innenwandseite (18) und einer dieser entgegengesetzten Außenwandseite (20) erstreckt,
wobei der Kühlkanal (10) in wenigstens einem spritzgegossenen einstückigen Abschnitt (22) der Gehäusewand (16) des Saugrohrgehäuses (4) zwischen der Innenwandseite (18) und der Außenwandseite (20) der Gehäusewand (16) ausgebildet ist,
wobei der Kühlkanal (10) in dem wenigstens einen Gehäusewandabschnitt (22) im Wesentlichen über seine gesamte Länge einen Querschnitt mit im Wesentlichen konstanter Querschnittsgestalt aufweist,
**dadurch gekennzeichnet, dass** der Kühlkanal (10) durch Projektilinjektionstechnik gebildet ist,
wobei der Kühlkanal (10) wenigstens abschnittsweise, vorzugsweise größtenteils, im Wesentlichen orthogonal zu der Strömungsrichtung des durch den Nutzkanal (7) geleiteten Fluids verläuft.

2. Saugrohr (2) für eine Brennkraftmaschine nach Anspruch 1,
**dadurch gekennzeichnet, dass** in dem wenigstens einen Gehäusewandabschnitt (22) dort (22a), wo sich ein Kühlkanal (10) befindet, der Abstand zwischen der Innenwandseite (18) und der Außenwandseite (20) größer ist als in einem kühlkanalfreien Bereich (22b) des Gehäusewandabschnitts (22).

3. Saugrohr (2) für eine Brennkraftmaschine nach Anspruch 1 oder 2,
**dadurch gekennzeichnet, dass** das Saugrohrgehäuse (4) mehrteilig ist.

4. Saugrohr (2) für eine Brennkraftmaschine nach Anspruch 3,
**dadurch gekennzeichnet, dass** der Kühlkanal (10) in nur einem Saugrohrgehäuseteil (4b) ausgebildet ist.

5. Saugrohr (2) für eine Brennkraftmaschine nach Anspruch 3,
**dadurch gekennzeichnet, dass** in mehreren, vorzugsweise in jedem, Saugrohrgehäuseteil je ein Kühlkanal (10) gebildet ist.

6. Saugrohr (2) für eine Brennkraftmaschine nach Anspruch 3 oder 5,
**dadurch gekennzeichnet, dass** sich der Kühlkanal (10) über mehrere Saugrohrgehäuseteile erstreckt.

7. Saugrohr (2) für eine Brennkraftmaschine nach einem der vorhergehenden Ansprüche,
**dadurch gekennzeichnet, dass** der wenigstens eine Gehäusewandabschnitt (22) im Wesentlichen vollständig aus einem kühlmittelbeständigen, vorzugsweise glykolbeständigen, Kunststoff gebildet ist.

8. Saugrohr (2) für eine Brennkraftmaschine nach einem der vorhergehenden Ansprüche,
**dadurch gekennzeichnet, dass** der wenigstens eine Gehäusewandabschnitt (22) im Wesentlichen vollständig aus einem Kunststoff gebildet ist und der Kunststoff Füllstoffe mit einer relativ zur Kunststoffmatrix höheren Wärmeleitfähigkeit aufweist.

9. Saugrohr (2) für eine Brennkraftmaschine nach einem der vorhergehenden Ansprüche,
**dadurch gekennzeichnet, dass** der Kühlkanal (10) einen im Wesentlichen kreisförmigen Querschnitt aufweist.

10. Saugrohr (2) für eine Brennkraftmaschine nach einem der vorhergehenden Ansprüche,
**dadurch gekennzeichnet, dass** der Kühlkanal (10) wenigstens abschnittsweise im Wesentlichen mäanderartig verläuft.

11. Saugrohr (2) für eine Brennkraftmaschine nach einem der vorhergehenden Ansprüche,
**dadurch gekennzeichnet, dass** es eine weitere, außerhalb von Gehäusewandabschnitten (22) vorgesehene, vorzugsweise in dem Nutzkanal (7) angeordnete Kühlvorrichtung zur Kühlung des Fluids umfasst.

12. Verfahren zur Herstellung eines Saugrohrs (2) für eine Brennkraftmaschine, insbesondere nach einem der vorhergehenden Ansprüche, umfassend den Schritt:
Füllen einer Formkavität mit einem einen Kunststoff umfassenden Gießmaterial zur Bildung eines einen Nutzkanal (7) umgebenden Gehäuseteilrohlings,
**gekennzeichnet durch** ein anschließendes Verdrängen von noch nicht gehärtetem Gießmaterial aus einem Gehäusewandabschnitt (22) des Gehäuseteilröhlings **durch** Projektilinjektion und **dadurch** Bildung eines Kühlkanals (10), wobei die den Verlauf des Kühlkanals bestimmende Trajektorie des Projektils **durch** Ausnehmungen in der Formkavität definiert wird, wobei die Ausnehmungen wenigstens abschnittsweise, vorzugsweise größtenteils, im Wesentlichen orthogonal zu einer Strömungsrichtung eines **durch** den Nutzkanal (7) geleiteten Fluids verlaufen.

13. Verfahren nach Anspruch 12,
**dadurch gekennzeichnet, dass** der Kühlkanal (10) im Wesentlichen über seine gesamte Länge einen Querschnitt mit im Wesentlichen konstanter Querschnittsgestalt aufweist.

14. Verfahren nach Anspruch 12 oder 13,
**dadurch gekennzeichnet, dass** die Injektion des Projektils durch ein druckbeaufschlagtes Fluid als Antriebsmechanismus bewirkt wird.

## Claims

1. An intake manifold (2) for an internal combustion engine, for supplying a fluid, such as for instance fresh gas, to the internal combustion engine, with an intake manifold housing (4), which surrounds a working duct (7), which extends for passage of the fluid between at least one fluid inlet (6) provided on the intake manifold housing (4) and at least one fluid outlet (8) provided on the intake manifold housing (4), and with a cooling duct (10), which extends for passage of a cooling medium, preferably a cooling liquid, from a cooling medium inlet (12) to a cooling medium outlet (14),
the intake manifold housing (4) comprising a housing wall (16), which extends in the direction (R) of the wall thickness between an inner wall side (18) defining the working duct (7) and an outer wall side (20) opposite thereto,
the cooling duct (10) being formed in at least one injection-moulded one-piece portion (22) of the housing wall (16) of the intake manifold housing (4) between the inner wall side (18) and outer wall side (20) of the housing wall (16),
the cooling duct (10) having a cross-section of substantially constant cross-sectional shape over substantially its entire length in the at least one housing wall portion (22),
**characterised in that** the cooling duct (10) is formed using projectile injection technology,
the cooling duct (10) extending at least in places, preferably for the most part, substantially orthogonally to the direction of flow of the fluid passing through the working duct (7).

2. An intake manifold (2) for an internal combustion engine according to claim 1,
**characterised in that** the distance between the inner wall side (18) and outer wall side (20) in the at least one housing wall portion (22) at the point (22a) where a cooling duct (10) is located is greater than in a region (22b) of the housing wall portion (22) in which the cooling duct is not located.

3. An intake manifold (2) for an internal combustion engine according to claim 1 or claim 2,
**characterised in that** the intake manifold housing (4) is of multipart construction.

4. An intake manifold (2) for an internal combustion engine according to claim 3,
**characterised in that** the cooling duct (10) is formed in just one intake manifold housing part (4b).

5. An intake manifold (2) for an internal combustion engine according to claim 3,
**characterised in that** a cooling duct (10) is formed in multiple intake manifold housing parts, preferably in each intake manifold housing part.

6. An intake manifold (2) for an internal combustion engine according to claim 3 or claim 5,
**characterised in that** the cooling duct (10) extends over a plurality of intake manifold housing parts.

7. An intake manifold (2) for an internal combustion engine according to any one of the preceding claims,
**characterised in that** the at least one housing wall portion (22) is formed substantially completely of a coolant-resistant, preferably glycol-resistant, plastics material.

8. An intake manifold (2) for an internal combustion engine according to any one of the preceding claims,
**characterised in that** the at least one housing wall portion (22) is formed substantially completely of a plastics material and the plastics material comprises fillers with a thermal conductivity which is higher than that of the plastics matrix.

9. An intake manifold (2) for an internal combustion engine according to any one of the preceding claims,
**characterised in that** the cooling duct (10) has a substantially circular cross-section.

10. An intake manifold (2) for an internal combustion engine according to any one of the preceding claims,
**characterised in that** the cooling duct (10) extends in a substantially zigzag manner at least in places.

11. An intake manifold (2) for an internal combustion engine according to any one of the preceding claims,
**characterised in that** it comprises a further cooling device for cooling the fluid, which device is provided outside of housing wall portions (22) and preferably arranged in the working duct (7).

12. A method for producing an intake manifold (2) for an internal combustion engine, in particular according to any one of the preceding claims, comprising the step:
filling a mould cavity with a moulding material comprising a plastics material to form a housing part blank surrounding a working duct (7),
**characterised by** subsequent displacement of as yet unhardened moulding material out of a housing wall portion (22) of the housing part blank by projectile injection, thereby forming a cooling duct (10), the trajectory of the projectile determining the profile of the cooling duct being defined by recesses in the mould cavity, the recesses extending at least in places, preferably for the most part, substantially orthogonally to a direction of flow of a fluid conveyed through the working duct (7).

13. A method according to claim 12,
**characterised in that** the cooling duct (10) has a cross-section with a substantially constant cross-sectional shape substantially over its entire length.

14. A method according to claim 12 or claim 13,
**characterised in that** injection of the projectile is effected by a pressurised fluid as drive mechanism.

## Revendications

1. Tubulure d'admission (2) pour un moteur à combustion interne, pour l'arrivée d'un fluide, comme par exemple du gaz frais, au moteur à combustion interne, avec un boîtier de tubulure d'admission (4), qui entoure un canal utile (7) qui s'étend, pour la transmission du fluide, entre au moins une entrée de fluide (6) prévue sur le boîtier de tubulure d'admission (4) et au moins une sortie de fluide (8) prévue sur le boîtier de tubulure d'admission (4), et avec un canal de refroidissement (10) qui s'étend, pour la transmission d'un fluide de refroidissement, de préférence d'un liquide de refroidissement, depuis une entrée de fluide de refroidissement (12) jusqu'à une sortie de fluide de refroidissement (14),
dans laquelle le boîtier de tubulure d'admission (4) présente une paroi de boîtier (16) qui s'étend, dans la direction de l'épaisseur de la paroi (R), entre une face de paroi intérieure (18) limitant le canal utile (7) et une face de paroi extérieure (20) opposée à celle-ci,
dans laquelle le canal de refroidissement (10) est formé dans au moins une partie d'une seule pièce moulée par injection (22) de la paroi de boîtier (16) du boîtier de tubulure d'admission (4) entre la face de paroi intérieure (18) et la face de paroi extérieure (20) de la paroi de boîtier (16),
dans laquelle le canal de refroidissement (10) présente dans ladite au moins une partie de paroi de boîtier (22), essentiellement sur toute sa longueur, une section transversale ayant une forme de section transversale essentiellement constante,
**caractérisée en ce que** le canal de refroidissement (10) est formé par la technique d'injection de projectile,
dans laquelle le canal de refroidissement (10) s'étend au moins localement, de préférence sur la plus grande partie, essentiellement en direction orthogonale à la direction d'écoulement du fluide conduit à travers le canal utile (7).

2. Tubulure d'admission (2) pour un moteur à combustion interne selon la revendication 1, **caractérisée en ce que**, dans ladite au moins une partie de paroi de boîtier (22), là (22a) où il se trouve un canal de refroidissement (10), la distance entre la face de paroi intérieure (18) et la face de paroi extérieure (20) est plus grande que dans une région (22b) de la partie de paroi de boîtier (22) sans canal de refroidissement.

3. Tubulure d'admission (2) pour un moteur à combustion interne selon la revendication 1 ou 2, **caractérisée en ce que** le boîtier de tubulure d'admission (4) est en plusieurs pièces.

4. Tubulure d'admission (2) pour un moteur à combustion interne selon la revendication 3, **caractérisée en ce que** le canal de refroidissement (10) n'est réalisé que dans une pièce (4b) du boîtier de tubulure d'admission.

5. Tubulure d'admission (2) pour un moteur à combustion interne selon la revendication 3, **caractérisée en ce qu'**un canal de refroidissement (10) est formé dans plusieurs, de préférence dans chaque pièce du boîtier de tubulure d'admission.

6. Tubulure d'admission (2) pour un moteur à combustion interne selon la revendication 3 ou 5, **caractérisée en ce que** le canal de refroidissement (10) s'étend sur plusieurs pièces du boîtier de tubulure d'admission.

7. Tubulure d'admission (2) pour un moteur à combustion interne selon l'une quelconque des revendications précédentes, **caractérisée en ce que** ladite au moins une partie de paroi de boîtier (22) est formée essentiellement entièrement en une matière plastique résistante au fluide de refroidissement, de préférence résistante au glycol.

8. Tubulure d'admission (2) pour un moteur à combustion interne selon l'une quelconque des revendications précédentes, **caractérisée en ce que** ladite au moins une partie de paroi de boîtier (22) est formée essentiellement entièrement en une matière plastique et la matière plastique présente des matières de charge présentant une conductibilité calorifique plus élevée par rapport à la matrice de matière plastique.

9. Tubulure d'admission (2) pour un moteur à combustion interne selon l'une quelconque des revendications précédentes, **caractérisée en ce que** le canal de refroidissement (10) présente une section transversale essentiellement circulaire.

10. Tubulure d'admission (2) pour un moteur à combustion interne selon l'une quelconque des revendications précédentes, **caractérisée en ce que** le canal de refroidissement (10) s'étend au moins en partie essentiellement sous forme sinueuse.

11. Tubulure d'admission (2) pour un moteur à combustion interne selon l'une quelconque des revendications précédentes, **caractérisée en ce qu'**elle comprend un autre dispositif de refroidissement prévu à l'extérieur de parties de paroi de boîtier (22), de préférence dans le canal utile (7), pour le refroidissement du fluide.

12. Procédé de fabrication d'une tubulure d'admission (2) pour un moteur à combustion interne, en particulier selon l'une quelconque des revendications précédentes, comprenant l'étape suivante:
remplir une cavité de moule avec un matériau de moulage comprenant une matière plastique pour la formation d'une ébauche de pièce de boîtier entourant un canal utile (7),
**caractérisé par** un déplacement ultérieur du matériau de moulage non encore durci hors d'une partie de paroi de boîtier (22) de l'ébauche de pièce de boîtier par injection d'un projectile et ainsi formation d'un canal de refroidissement (10), dans lequel la trajectoire du projectile déterminant le tracé du canal de refroidissement est définie par des évidements dans la cavité de moule, dans lequel les évidements s'étendent au moins localement, de préférence pour la plus grande part, essentiellement en direction orthogonale à une direction d'écoulement d'un fluide conduit à travers le canal utile (7).

13. Procédé selon la revendication 12, **caractérisé en ce que** le canal de refroidissement (10) présente, essentiellement sur toute sa longueur, une section transversale ayant une forme de section transversale essentiellement constante.

14. Procédé selon la revendication 12 ou 13, **caractérisé en ce que** l'injection du projectile est effectuée au moyen d'un fluide comprimé comme mécanisme propulseur.
